(19) Europäisches Patentamt
European Patent Office
Office européen des brevets

(11) Publication number: 0 282 188 B1

(12) EUROPEAN PATENT SPECIFICATION

(45) Date of publication of patent specification: 21.11.91 Bulletin 91/47

(51) Int. Cl.[5]: G11B 5/72, G11B 5/71

(21) Application number: 88301375.7

(22) Date of filing: 18.02.88

# (54) Recording medium and method of producing the same.

(30) Priority: 09.03.87 JP 53301/87

(43) Date of publication of application: 14.09.88 Bulletin 88/37

(45) Publication of the grant of the patent: 21.11.91 Bulletin 91/47

(84) Designated Contracting States: DE FR GB

(56) References cited:
Patent Abstracts of Japan, unexamined applications, E section, vol. 1, no. 117, 06.10.77, The Patent Office Japanese Government, p. 4635 E 77 + p. 4636 E 77, Kokai-no. 52-49 803, 52-49 804, 52-49 805

(73) Proprietor: MATSUSHITA ELECTRIC INDUSTRIAL CO., LTD.
1006, Oaza Kadoma
Kadoma-shi, Osaka-fu, 571 (JP)

(72) Inventor: Ogawa, Kazufumi
1-chome 30-5 Higashinakafuri
Hirakata Osaka 573 (JP)
Inventor: Tamura, Hideharu
4-chome 5-504 Ikuno
Katano Osaka 576 (JP)

(74) Representative: Crawford, Andrew Birkby et a
A.A. THORNTON & CO. Northumberland House 303-306 High Holborn
London WC1V 7LE (GB)



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

This invention relates to a recording medium and, more particularly, to the provision of a protective layer on a recording layer of a recording medium, such as magnetic tape, magnetic disc, magnetic card, opto-magnetic disc, or optical disc.

Conventional technology is conveniently described by reference to a magnetic recording medium by way of example. Magnetic recording medium is roughly classified into two types, that is the coating type and the deposition type.

The coating type magnetic recording medium is generally formed by the following method. Magnetic powder, such as $Fe_2O_3$ or γ-$Fe_2O_3$ containing a Co additive, is mixed with polyvinyl chloride resin, butyral resin, toluene, and methyl isobutyl ketone to form a coating mixture. This mixture is applied to the surface of a suitable base material to a thickness of 4-5 um. This method has an advantage that production of the recording medium is easy, but has the disadvantage that the performance of the material is not sufficient for use in high density recording because there is a lower limit to the size of magnetic powder.

In contrast, the deposition type of recording medium has better recording density than the coating type, but is subject to the disadvantage of reduced durability since the magnetic metal layer is exposed on the surface of the recording medium. To solve this problem, an overcoating is applied on a deposition metal layer to a thickness of 0.1 to 0.2 um (2000 ~ 2000 Å), and is formed by the use of a sputtering or electron beam method. Further, a smoothing agent is then applied on the deposition metal layer. However, even this process cannot solve the problem perfectly; that is, sufficient durability cannot be obtained. In addition, since overcoating and coating with the smoothing agent in thin and even layers are difficult to carry out, the gap between recording or reading magnetic head and a recording layer is widened so that it is difficult to obtain sufficiently high density recording performance.

Accordingly, a principal object of the invention is to provide a recording medium which is capable of providing high density recording performance.

These and other objects will be accomplished by a recording medium which comprises a base material of the recording medium, at least one recording layer formed on the base material, and at least one protective layer formed on the recording layer, the protective layer consisting of a mono-molecular layer or a plurality of superimposed mono-molecular layers of a polymeric fluorinated silane surface active agent.

In a specific embodiment, the surface active agent has the formula :

$$CF_3\text{-}(CF_2)m\text{-}(CH_2)n\text{-}SiCl_3 \text{ (m, n : integer).}$$

The recording and protective layers may be formed on both surfaces of the base body.

This invention has various advantages, includin the following :

(1) It makes possible the provision of a recording medium which is capable of high density recording.

(2) It is possible to provide a recording medium having a very thin organic film of high density and even thickness formed on a surface thereof without pin-holes. Therefore, where the recording medium is a magnetic recording medium as one example, the performance of a recording and reproducing magnetic head may be improved and noise reduced.

(3) The protective layer can be readily coated on a surface of the base of a recording medium so that it is free from pin-holes and of even thickness. Because a surface active agent containing fluorine is used, the protective layer is smooth so that a smoothness-related characteristic of a recording/reproducing head, i.e. durability, is improved.

While the novel features of the invention are set forth in the appended claims, the invention, both in organization and content, will be better understood and appreciated, along with other objects and features thereof, from the following detailed description thereof in conjunction with the drawings, in which :

Figure 1 is a section view of magnetic recording medium in a first embodiment of the invention ;

Figure 2 shows processes for producing the recording medium of the first embodiment ;

Figure 3 is a section view of a recording medium in a second embodiment ;

Figure 4 shows a machine for producing the recording medium ; and

Figure 5 is a section view of magnetic recording medium in a third embodiment.

Figures 1 and 2 show a first embodiment of the invention used as a magnetic recording medium. The magnetic recording medium 10, as shown in Fig. 1, is constructed as follows : firstly there is provided a disc plate 12 for use in magnetic recording (i.e. the base of recording medium). A magnetic recording layer 14 (e.g., magnetic metal or magnetic metal oxide such as Fe-Ni, Ni-$C_2$, $Fe_2O_3$) is formed on the disc plate 12 by means of a sputtering deposition method, etc. Thereafter, a silane surface active agent containing fluorine atoms is adsorbed to the magnetic recording layer 14 is that a single-molecule protection film 16, which is formed by the silane surface active agent containing fluorine atoms, is formed.

As an example of the silane surface active agent 18 which is used, the compound having the formula :

$$CF_3\text{-}(CF_2)m\text{-}(CH_2)n\text{-}SiCl_3$$

(m, n : integer ; values of m and n of from 5 to about 15 are the easiest to handle) is shown in Fig. 2. A solution in a mixture of 80% n-hexane, 12% trichloromethane and 8% chloroform and in which the silane surface active agent is dissolved to give a concentration of from $2 \times 10^{-3}$ to $5.0 \times 10^{-2}$ mol/litre, is used. The base of recording medium base 12 on which the magnetic recording layer 14 is formed as immersed in the aforementioned solution.

As a result, a bond 20 of

$$CF_3-(CF_2)m-(CH_2)n-\overset{\overset{\displaystyle O}{|}}{\underset{\underset{\displaystyle O}{|}}{Si}}-O-$$

is formed between the magnetic recording layer 14 and the silane surface active agent 18, since natural oxide is formed on the metal surface of the magnetic recording layer 14. The protection film 16 having a high smoothness characteristic of a mono-molecular film (which is formed by silane surface active agent containing fluorine atoms) is further formed up to a thickness of 2 to 3 nm (20 ~ 30 Å) in such a manner that fluorine atoms 22 are juxtaposed as shown in Fig. 2.

Incidentally, the above described protection film 16 is applicable as a protective film for other recording media such as optical discs or semiconductor devices. Further, derivatives of di-acetylene such as:

$$CF_3-(CF_2)m-(CH_2)n-C\equiv C-C\equiv C-(CH_2)l-SiCl_3$$

(n, m, l : integer) are used as the material for chemical adsorption, a bridge can be formed upon irradiation of the material by ultraviolet rays, so that conductivity in a surface direction can be attained without the surface of the base becoming electrically charged.

A second embodiment of the invention is shown in Fig. 3. The first embodiment is of the recording medium showed the recording layer being formed on only one surface of the medium, whereas in the second embodiment of the recording medium, the recording layer 14 and protection film 16 are formed on both surfaces of the base 12.

A machine for manufacturing a recording medium is shown in Fig. 4 assuming that the recording medium is a magnetic recording tape. An uncoated magnetic recording tape 44 which is supplied from supply drum 46 passes through a first solution 48 for chemical absorption, a first reaction solution 50, a second reaction solution 52 and second solution 54 for chemical adsorption, respectively so that tape 56 having the recording layer and protection film formed thereon is obtained and taken up by take-up drum 58. In Fig. 4, capstan rollers 60 form the tape feed path through the different solutions.

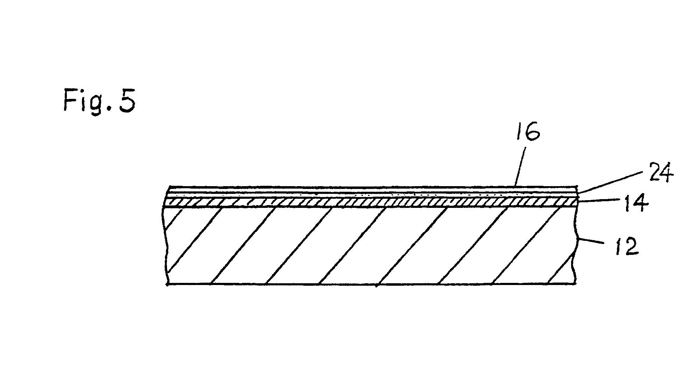

In the afore-mentioned embodiments, a monmolecular film containing fluorine is formed directly on a recording layer by chemical adsorption. However, it is possible to use another structure, as shown in Fig. 5 which structure comprises an intermediate layer 24 formed of, for example, $SiO_2$, $Si_3N_4$, C or other metal oxide (e.g., $MoO_3$, $WO_3$) which is first formed on the recording layer 14, and the protection film 16 is formed on the intermediate layer 24 by chemical adsorption. In this embodiment the durability of the recording medium is further improved.

## Claims

1. A recording medium which comprises :
a base material for the recording medium ;
at least one recording layer formed on the base material ; and
at least one protective layer formed on the recording layer, the protective layer consisting of a mono-molecular layer or a plurality of superimposed mono-molecular layers of a polymeric fluorinated silane surface active agent.

2. A recording medium according to claim 1, in which the surface active agent has the formula :

$$CF_3-(CF_2)_m-(CH_2)_n-SiCl_3$$

where m and n are integers.

3. A recording medium according to claim 1 or 2, in which the base material is in the form of tape or disc and the recording and protective layers are provided on both surfaces of the base material.

4. A recording medium according to any of claims 1 to 3, in which the base material is optically transparent.

5. A recording medium according to any of claims 1 to 4, which is a magnetic recording medium, an optical recording medium, or a recording disc.

## Patentansprüche

1. Aufzeichnungsmedium, umfassend ein Trägermaterial für das Aufzeichnungsmedium, wenigstens eine Aufzeichnungsschicht, die auf dem Trägermaterial gebildet wird ; und wenigstens eine Schutzschicht, die auf der Aufzeichnungsschicht gebildet wird, wobei die Schutzschicht aus einer monomolekularen Schicht oder einer Mehrzahl von übereinandergelagerten monomolekularen Schichten aus einem polymeren fluorierten Silan als oberflächenaktivem Mittel besteht.

2. Aufzeichnungsmedium nach Anspruch 1, worin das oberflächenaktive Mittel die Formel

$$CF_3-(CF_2)_m-(CH_2)_n-SiCl_3$$

besitzt, worin m und n ganze Zahlen sind.

3. Aufzeichnungsmedium nach Anspruch 1 oder 2, worin das Trägermaterial in Form eines Bands oder einer Platte ist und die Aufzeichnungs- und Schutzschicht auf beiden Oberflächen des Trägermaterials vorgesehen sind.

4. Aufzeichnungsmedium nach einem der Ansprüche 1 bis 3, worin das Trägermaterial optisch transparent ist.

5. Aufzeichnungsmedium nach einem der Ansprüche 1 bis 4, welches ein magnetisches Aufzeichnungsmedium, ein optisches Aufzeichnungsmedium oder eine Aufzeichnungsplatte ist.

## Revendications

1. Support d'enregistrement qui comprend :

un matériau de base du support d'enregistrement,

au moins une couche d'enregistrement formée sur le matériau de base, et

au moins une couche protectrice formée sur la couche d'enregistrement, la couche protectrice étant constituée d'une couche monomoléculaire ou de plusieurs couches monomoléculaires superposées d'un agent tensioactif de silane fluoré polymère.

2. Support d'enregistrement selon la revendication 1, dans lequel l'agent tensioactif a la formule :

$$CF_3\text{-}(CF_2)_m\text{-}(CH_2)_n\text{-}SiCl_3$$

m et n étant des nombres entiers.

3. Support d'enregistrement selon la revendication 1 ou 2, dans lequel le matériau de base est sous forme d'une bande ou d'un disque et les couches d'enregistrement et protectrice sont formées sur les deux faces du matériau de base.

4. Support d'enregistrement selon l'une quelconque des revendications 1 à 3, dans lequel le matériau de base est optiquement transparent.

5. Support d'enregistrement selon l'une quelconque des revendications 1 à 4, qui est un support d'enregistrement magnétique, un support d'enregistrement optique ou un disque d'enregistrement.

Fig. 1

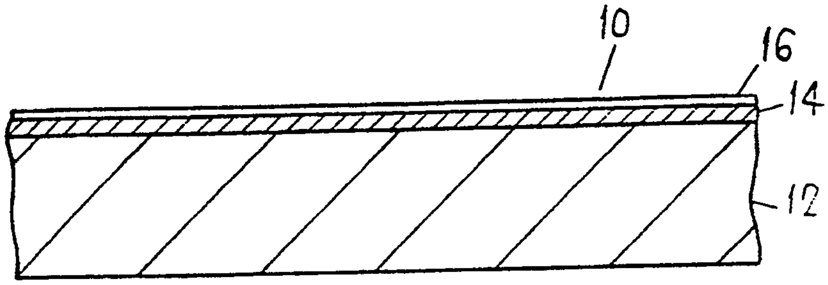


Fig. 2

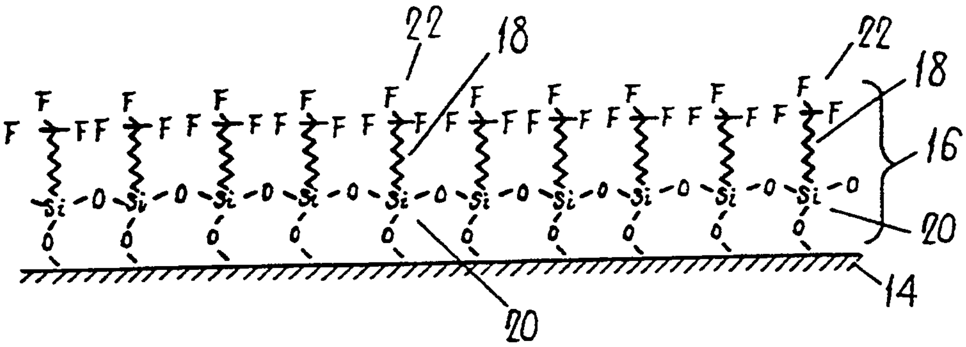


Fig. 3

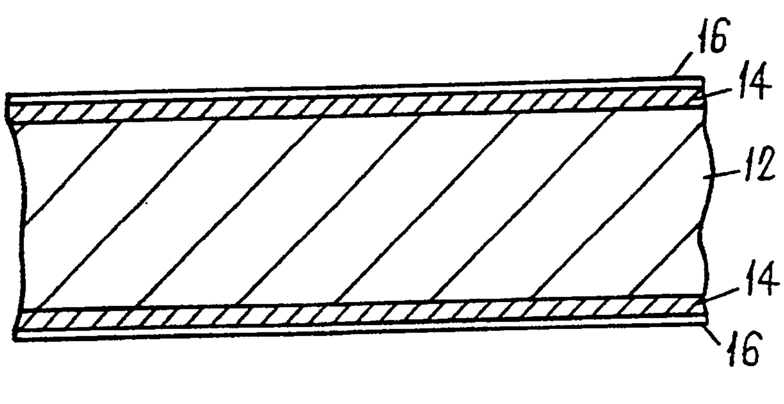

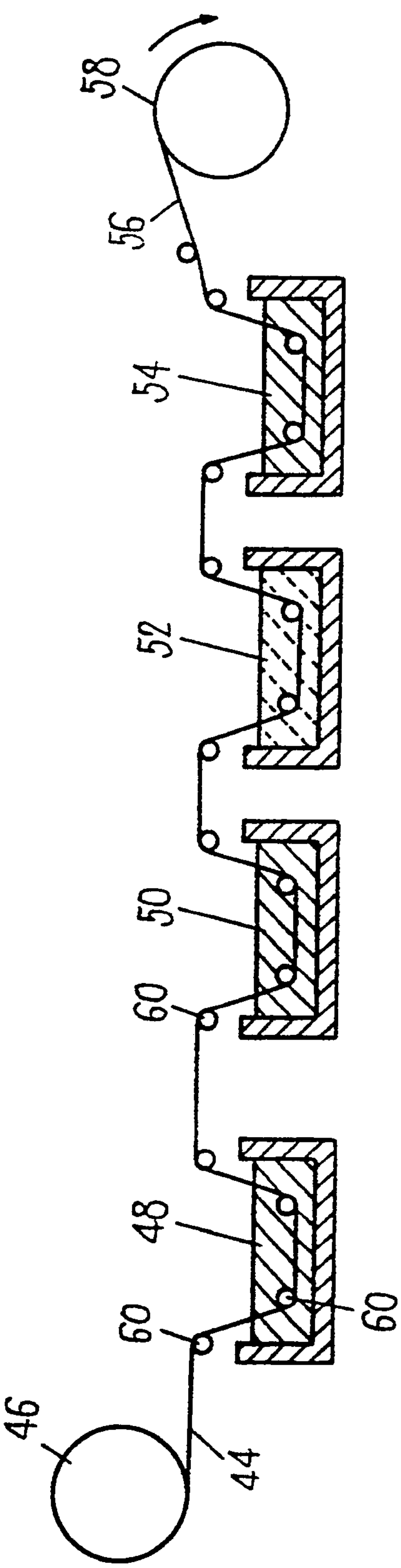


Fig.4

Fig. 5